# Europäisches Patentamt

# European Patent Office

# Office européen des brevets

(19)

(11) Veröffentlichungsnummer: **0 066 927
B1**

(12) **EUROPÄISCHE PATENTSCHRIFT**

(45) Veröffentlichungstag der Patentschrift:
**27.08.86**

(21) Anmeldenummer: **82200652.4**

(22) Anmeldetag: **28.05.82**

(51) Int. Cl.⁴: **H 05 B  41/24**

(54) Verfahren zum Betrieb einer Hochdruck-Metalldampfentladungslampe und Schaltungsanordnung zur Ausübung dieses Verfahrens.

(30) Priorität: **04.06.81  DE 3122183
27.01.82  DE 3202499**

(43) Veröffentlichungstag der Anmeldung:
**15.12.82 Patentblatt 82/50**

(45) Bekanntmachung des Hinweises auf die Patenterteilung:
**27.08.86 Patentblatt 86/35**

(84) Benannte Vertragsstaaten:
**BE DE FR GB NL**

(56) Entgegenhaltungen:
**DE - A - 2 335 589
DE - A - 2 704 311
DE - A - 2 847 840
US - A - 3 890 537**

(73) Patentinhaber: **Philips Patentverwaltung GmbH,
Billstrasse 80, D-2000 Hamburg 28 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **BE FR GB NL**

(72) Erfinder: **Ganser, Hans-Günter, Brockenberg 7a,
D-5190 Stolberg (DE)**
Erfinder: **Kersten, Reinhard, Dr., Meischenfeld 29,
D-5100 Aachen (DE)**
Erfinder: **Schäfer, Ralf, Dr., Salierallee 1, D-5100 Aachen
(DE)**
Erfinder: **Stormberg, Hans-Peter, Dr., Weissdornweg 52,
D-5190 Stolberg (DE)**

(74) Vertreter: **Auer, Horst, Dipl.-Ing. et al, Philips
Patentverwaltung GmbH
Billstrasse 80 Postfach 10 51 49,
D-2000 Hamburg 28 (DE)**

ACTORUM AG

## Beschreibung

Verfahren zum Betrieb einer Hochdruck-Metalldampfentladungslampe und Schaltungsanordnung zur Ausübung dieses Verfahrens.

Die Erfindung bezieht sich auf ein Verfahren zum Betrieb einer Hochdruck-Metalldampfentladungslampe mit einer periodischen Betriebsspannung von über 500 Hz. Unter einer periodischen Betriebsspannung ist z.B. eine sinus-, dreieck- oder rechteckförmige Spannung zu verstehen.

Beim Betrieb von Hochdruck-Metalldampfentladungslampen, wie Hochdruck-Natriumdampfentladungslampen, -Quecksilberdampfentladungslampen und -Metallhalogenidentladungslampen, oberhalb der Netzfrequenz treten in bestimmten Frequenzbereichen in den Lampen Bogeninstabilitäten auf. Diese werden durch akustische Resonanz des Entladungsbogens im Lampenkolben hervorgerufen. Bei einigen Lampentypen treten Bogeninstabilitäten in sehr grossen Frequenzbereichen der Betriebsspannung auf. Bisher wurde daher angenommen, dass ein stabiler Betrieb dieser Lampen nur in relativ schmalen Frequenzbändern möglich ist. So sind z.B. in der DE-OS 2 847 840 für Miniatur-Metallhalogenidentladungslampen instabilitätsfreie Frequenzbänder von 3 bis 5 KHz Breite zwischen 20 und 50 KHz beschrieben.

Aus der DE-OS 2 335 589 ist es darüber hinaus bekannt, zur Vermeidung von Bogeninstabilitäten hervorrufenden akustischen Resonanzen bei Niederdruck- und Hochdruck-Quecksilberdampfentladungslampen die hochfrequente Versorgungsspannung (z.B. 20 KHz) mit einem niederfrequenten Signal zu modulieren. In dieser DE-OS wird aber zugegeben, dass selbst ein hoher Grad von Frequenzmodulation nicht ausreicht, um Resonanzeffekte vollständig zu unterdrücken.

Gemäss der US-PS 3 890 537 vermeidet man akustische Resonanzen bei mit einem pulsierenden Strom betriebenen Quecksilberdampfentladungslampen, indem die Zerhackerfrequenz automatisch gewobbelt wird. Es gibt aber Resonanzfrequenzen, bei denen ein Wobbeln der Zerhackerfrequenz versagt. Insbesondere bei kleinen Hochdruck-Metalldampfentladungslampen hat sich ein alleiniges Wobbeln der Betriebsspannung als praktisch wirkungslos erwiesen.

Der Erfindung liegt daher die Aufgabe zugrunde, ein Verfahren zum Betrieb von Hochdruck-Metalldampfentladungslampen über 500 Hz zu schaffen, bei dem über einen sehr grossen Frequenzbereich von z.B. 500 Hz bis 200 KHz in den Lampen praktisch keine akustischen Resonanzen und dadurch verursachte Bogeninstabilitäten auftreten.

Diese Aufgabe wird bei einem Verfahren eingangs erwähnter Art gemäss der Erfindung dadurch gelöst, dass die Betriebsspannung ständig sprunghaft in der Phase geändert wird.

Die ständigen Phasenänderungen stören die Anregung von akustischen Resonanzen, welche die Ursache der Bogeninstabilitäten sind.

Vorzugsweise macht die Betriebsspannung Phasensprünge mit einer Grösse von 50 bis 130°, insbesondere von 90°, d.h. 180° in der Leistung.

Die Phasenänderung kann periodisch erfolgen. Hierbei treten aber im Frequenzspektrum der Betriebsspannung Seitenbänder auf, die selbst wieder zu Instabilitäten führen können. Die Amplitude dieser Seitenbänder kann jedoch dadurch reduziert werden, dass die Phasenänderung statistisch, d.h. in unregelmässigen Abständen, vorgenommen wird. Bogeninstabilitäten benötigen zur Anregung einen gewissen Schwellwert, welcher mit Hilfe statistischer Phasenänderung unterschritten werden kann.

Vorzugsweise erfolgt die Phasenänderung jeweils nach ½ bis 20 Perioden der Betriebsspannung.

Wie bereits ausgeführt, treten bei periodischen Phasenänderungen, insbesondere bei Miniatur-Metallhalogenidentladungslampen, im bei statistischer Phasenänderung instabilitätsfreien Frequenzbereich der Betriebsspannung bogeninstabile Frequenzbänder auf.

Gemäss einer vorteilhaften Weiterbildung des Verfahrens nach der Erfindung zum Betrieb von kleinen Hochdruck-Metalldampfentladungslampen für Frequenzen über 5 KHz, bei dem die periodische Betriebsspannung periodisch sprunghaft in der Phase geändert wird und dennoch über einen grossen Frequenzbereich von z.B. 20 bis 60 KHz in den Lampen praktisch keine akustischen Resonanzen und dadurch verursachte Bogeninstabilitäten auftreten, wird die Betriebsspannung gleichzeitig in ihrer Frequenz gewobbelt.

Überraschenderweise hat sich herausgestellt, dass durch das allein praktisch wirkungslose Wobbeln der Betriebsspannungsfrequenz bei gleichzeitigen periodischen Phasenänderungen der von akustischen Instabilitäten freie Frequenzbereich gegenüber dem Stabilitätsbereich bei alleiniger periodischer Phasenänderung nicht nur erweitert, sondern auch von bogeninstabilen Zwischenbändern befreit wird.

Unter kleinen Hochdruck-Metalldampfentladungslampen sind solche mit einem Kolbenvolumen bis maximal etwa 2 ccm zu verstehen.

Gemäss einer bevorzugten Weiterbildung des Verfahrens nach der Erfindung wird der Betriebsspannung eine Gleichspannung überlagert. Ein derartiger pulsierender Gleichstrombetrieb lässt sich durch ein elektronisches Vorschaltgerät einfacher realisieren als ein reiner Wechselstrombetrieb. Bei kleinen Lampen, insbesondere Miniatur-Metallhalogenidentladungslampen, bringt ein pulsierender Gleichstrombetrieb keine Probleme mit sich, da hier, im Gegensatz zu Hochdruckentladungslampen mit grossem Elektrodenabstand, die axiale Entmischung der Substanzen durch Kataphorese praktisch keine Rolle spielt.

Im Fall des pulsierenden Gleichstrombetriebes kann die Betriebsspannung Phasensprünge von 100 bis 250°, vorzugsweise 180°, aufweisen.

Die Erfindung bezieht sich ausserdem auf eine Schaltungsanordnung zur Ausübung des beschriebenen Verfahrens. Diese Schaltungsanordnung ist gemäss der Erfindung dadurch gekennzeichnet, dass ein periodisches Signal eines Signalgenerators einmal direkt und einmal über einen Phasenschieber einem Analog-Multiplexer und von dort über einen Leistungsverstärker der Hochdruck-Metalldampfentladungslampe als Betriebsspannung zugeführt wird, wobei mit Hilfe eines digitalen Impulsgenerators der Analog-Multiplexer entweder periodisch oder statistisch abwechselnd direkt oder über den Phasenschieber den Signalgenerator mit dem Leistungsverstärker verbindet.

Bei gleichzeitigem Wobbeln der Betriebsspannung ist diese Schaltungsanordnung vorzugsweise dadurch gekennzeichnet, dass der Analog-Multiplexer periodisch den Signalgenerator mit dem Leistungsverstärker verbindet und der spannungsgesteuerte Signalgenerator von einem Spannungsgenerator konstanter Amplitude $U_w$ und Frequenz $f_w$ derart beaufschlagt wird, dass sein Ausgangssignal in der Frequenz um eine Mittenfrequenz $f_o$ mit einem Frequenzhub $\pm \Delta f$ geändert wird.

Zur Überlagerung der Betriebsspannung mit einer Gleichspannung ist gemäss einer Weiterbildung der Schaltungsanordnung nach der Erfindung zwischen Leistungsverstärker und Lampe eine Gleichspannungsquelle geschaltet.

Zwei Ausführungsbeispiele nach der Erfindung werden nunmehr anhand der Zeichnung näher erläutert. Es zeigen:

Fig. 1 ein Blockschaltbild einer Schaltungsanordnung zum Betrieb einer Hochdruck-Metalldampfentladungslampe,

Fig. 2 den Verlauf der Lampenspannung für den Fall eines 90°-Phasensprunges nach jeweils etwa 1,5 Perioden der sinusförmigen Betriebsspannung,

Fig. 3 einen der Fig. 2 entsprechenden Spannungsverlauf mit 90°-Phasensprüngen nach jeweils etwa 5,5 Perioden der sinusförmigen Betriebsspannung,

Fig. 4 ein Blockschaltbild einer anderen Schaltungsanordnung zum Betrieb einer kleinen Hochdruck-Metalldampfentladungslampe,

Fig. 5 den Verlauf der Lampenspannung für den Fall eines pulsierenden Gleichstrombetriebes.

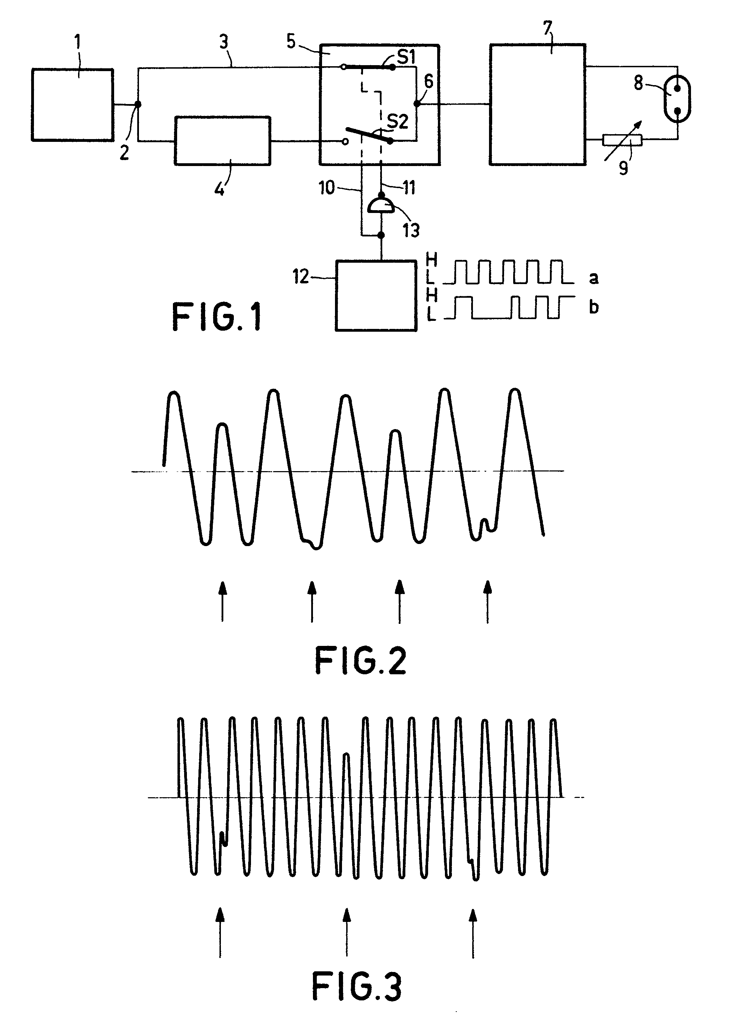

Bei der Schaltungsanordnung nach Fig. 1 erzeugt ein Signalgenerator 1 eine sinusförmige Ausgangsspannung konstanter Frequenz f, die vom Knotenpunkt 2 aus einmal über eine Leitung 3 direkt und einmal über einen Phasenschieber 4 einem Analog-Multiplexer 5 zugeführt wird. Der Ausgang 6 des Analog-Multiplexers 5 ist mit einem linearen Leistungsverstärker 7 verbunden, an den eine Hochdruck-Metalldampfentladungslampe 8 in Reihe mit einer Ballastimpedanz 9 angeschlossen ist.

Der Analog-Multiplexer 5 wirkt praktisch wie ein Schalter mit zwei Schaltkontakten S1 und S2. Über Leitungen 10 und 11 wird der Analog-Multiplexer 5 von einem digitalen Impulsgenerator 12 gesteuert. In die Leitung 11 ist ein Inverter 13 zwischengeschaltet. Ist der Ausgang des digitalen Impulsgenerators 12 auf LOW-Signal (L) geschaltet, so steht an der Leitung 10 ebenfalls L an, während die Leitung 11 über den Inverter 13 auf HIGH-Signal (H) geschaltet ist. In diesem Zustand schliesst der Analog-Multiplexer 5 seinen Schalter S1, so dass am Ausgang 6 direkt die Spannung des Signalgenerators 1 anliegt. Wenn der Ausgang des digitalen Impulsgenerators 12 auf H geschaltet ist, so steht auch an der Leitung 10 H an, während die Leitung 11 über den Inverter 13 auf L gesetzt wird. In diesem Zustand schliesst der Schalter S2 des Analog-Multiplexers 5, so dass an seinem Ausgang 6 die phasenverschobene Spannung des Signalgenerators 1 anliegt. Die Phasenänderung der Ausgangsspannung des Analog-Multiplexers 5 gegenüber der Ausgangsspannung des Signalgenerators 1 kann mit Hilfe des Phasenschiebers 4 durch Phasensprünge von 50 bis 130°, vorzugsweise von 90°, erfolgen; die gewünschte Phasenänderung kann am Phasenschieber 4 eingestellt werden.

Liefert der digitale Impulsgenerator 12 eine periodische Impulsreihe (a), so erscheint am Ausgang 6 des Analog-Multiplexers 5 abwechselnd die direkte Spannung oder die phasengeänderte Spannung des Signalgenerators 1. Die Frequenz der Phasenänderung der Ausgangsspannung des Analog-Multiplexers 5 ist durch die Grundfrequenz $f_p$ der periodischen Impulsreihe (a) des digitalen Impulsgenerators 12 gegeben. Eine Phasenänderung am Ausgang 6 des Analog-Multiplexers 5 tritt also jeweils nach $f/f_p$-Perioden der Signalgeneratorspannung auf, so dass sich durch Wahl dieses Verhältnisses die Zeitfolge der Phasenänderungen einstellen lässt. Erfolgt die H/L-Umschaltung des digitalen Impulsgenerators 12 unregelmässig, d. h. statistisch verteilt (Impulsreihe b), so ergibt sich eine ebenfalls unregelmässige Phasenänderung der Spannung am Ausgang 6 des Analog-Multiplexers 5.

Die so erhaltene Ausgangsspannung des Analog-Multiplexers 5 mit periodischen oder statistischen Phasenänderungen in Form von Phasensprüngen wird dann über den linearen Leistungsverstärker 7 der Lampe 8 als Betriebsspannung zugeführt.

Bei einem praktischen Ausführungsbeispiel war die Lampe 8 eine 300-W-Quecksilberhochdruckentladungslampe. Der Signalgenerator 1 erzeugte eine Spannung von etwa 3 KHz. Diese Frequenz liegt in einem Instabilitätsgebiet der in Frage stehenden Lampe. Die Fig. 2 und 3 zeigen die zeitlichen Verläufe der Lampenspannung für den Fall eines 90°-Phasensprunges nach jeweils etwa 1,5 bzw. 5,5 Perioden der sinusförmigen Ausgangsspannung des Signalgenerators 1. (Die einzelnen Phasensprünge sind durch kleine Pfeile unterhalb der Spannungsverläufe gekennzeichnet.) Durch diese Phasenänderungen lässt sich ein stabiler Betrieb der Lampe erreichen. Auch bei Phasensprüngen von mehr oder weniger als 90°, z.B. zwischen 50 und 130°, lassen sich Bogeninstabilitäten in der Lampe vermeiden, ohne auf die sonstigen Vorteile des Hochdruckfrequenzbetriebes der Lampe zu verzichten.

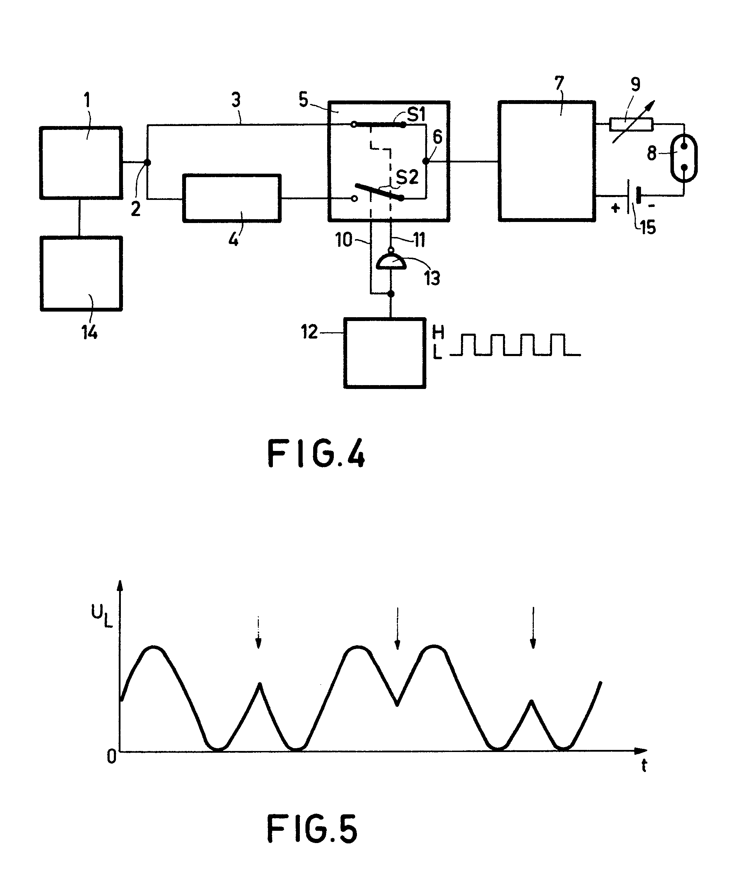

Bei der Schaltungsanordnung nach Fig. 4 ist gegenüber der Schaltungsanordnung nach Fig. 1 ein zusätzlicher Spannungsgenerator 14 vorgesehen, der eine periodische, z.B. sinusförmige Spannung der Amplitude $U_w$ und der Frequenz $f_w$ erzeugt, mit der der spannungsgesteuerte Signalgenerator 1 beaufschlagt wird. Dieser erzeugt wiederum eine periodische, im vorliegenden Fall sinusförmige Ausgangsspannung, deren Frequenz um eine einstellbare Mittenfrequenz $f_o$ herum mit der Wobbelfrequenz $f_w$ zwischen $f_o-\Delta f$ und $f_o + \Delta f$ geändert wird, wobei der Frequenzhub $\Delta f$ durch die Amplitude $U_w$ der Wobbelspannung bestimmt wird. Diese in ihrer Frequenz dauernd geänderte Ausgangsspannung des Signalgenerators 1 wird dann vom Knotenpunkt 2 aus einmal über die Leitung 3 direkt und einmal über den Phasenschieber 4 dem Analog-Multiplexer 5 zugeführt. Der Ausgang 6 des Analog-Multiplexers 5 ist wiederum mit dem linearen Leistungsverstärker 7 verbunden, an den eine kleine Hochdruck-Metalldampfentladungslampe 8 in Reihe mit der Ballastimpedanz 9 angeschlossen ist.

Wenn der Schalter S2 des Analog-Multiplexers 5 schliesst, liegt an seinem Ausgang 6 die phasenverschobene und gewobbelte Spannung des Signalgenerators 2 an. Da der digitale Impulsgenerator 12 eine periodische Impulsreihe liefert, erscheint am Ausgang 6 des Analog-Multiplexers 5 abwechselnd die direkte gewobbelte Spannung oder die phasengeänderte gewobbelte Spannung des Signalgenerators 1. Die Frequenz der Phasenänderung der Ausgangsspannung des Analog-Multiplexers 5 ist durch die Grundfrequenz $f_p$ der periodischen Impulsreihe des digitalen Impulsgenerators 12 gegeben. Eine Phasenänderung am Ausgang 6 des Analog-Multiplexers 5 tritt also jeweils nach etwa $f_o/f_p$-Perioden der Signalgeneratorspannung auf, so dass sich durch Wahl dieses Verhältnisses die Zeitfolge der Phasenänderungen einstellen lässt. Die so erhaltene Ausgangsspannung des Analog-Multiplexers 5 mit periodischen Phasenänderungen in Form von Phasensprüngen wird dann über den linearen Leistungsverstärker 7 der Lampe 8 als Betriebsspannung zugeführt.

In der Schaltungsanordnung nach Fig. 4 ist zwischen den Leistungsverstärker 7 und die Lampe 8 eine zusätzliche Gleichspannungsquelle 15 (z.B. 100 V) geschaltet. Dadurch wird die Lampe 8 mit Gleichstrom betrieben, dem der vom Leistungsverstärker 7 gelieferte Betriebswechselstrom überlagert ist. In diesem Fall des pulsierenden Gleichstrombetriebes stimmen die Frequenzen der Spannungsmodulation und der Leistungsmodulation überein. Um einen Phasensprung von 180° in der Leistung zu erreichen, muss deshalb der Phasensprung der Betriebsspannung ebenfalls 180° betragen, im Gegensatz zu 90° bei reinem Wechselspannungsbetrieb der Lampe. Der zulässige Bereich für den Phasensprung beträgt etwa 100 bis 250°.

Bei einem praktischen Ausführungsbeispiel war die Lampe 8 eine elliptische 45-W-Metallhalogenid-Hochdruckentladungslampe mit etwa 7 mm Kolbendurchmesser und einem Kolbenvolumen von etwa 0,5 ccm. Der spannungsgesteuerte Signalgenerator 1 erzeugte eine Spannung mit einer Mittenfrequenz $f_o$ im Frequenzbereich zwischen 20 und 50 KHz. Der Frequenzhub $\Delta f$ betrug 500 Hz bis 15 KHz, vorzugsweise 5 KHz. Die Wobbelfrequenz $f_w$ des Spannungsgenerators 14 lag zwischen 30 Hz und 15 KHz, vorzugsweise bei 100 Hz.

In Fig. 5 ist der zeitliche Verlauf der Lampenspannung $U_L$ für den Fall eines 180°-Phasensprunges der gewobbelten sinusförmigen Ausgangsspannung des Signalgenerators 1 dargestellt (die einzelnen Phasensprünge sind durch Pfeile oberhalb des Spannungsverlaufes gekennzeichnet). Der Spannungsverlauf kann auch so liegen, dass er die Null-Linie überhaupt nicht berührt. Mit dem dargestellten Spannungsverlauf ergab sich für die Lampe 8 ein instabilitätsfreies Frequenzband von etwa 25 KHz Breite. Im Gegensatz dazu betrug das instabilitätsfreie Frequenzband bei Betrieb der Lampe mit einer reinen sinusförmigen Betriebsspannung nur etwa 3 KHz.

Das breite Stabilitätsfrequenzband erlaubt hohe Toleranzen bei der Frequenzfestlegung der elektronischen Vorschaltgeräte und auch bei der Einhaltung der Lampenabmessungen.

Bei der Anwendung des Verfahrens auf elektronische Hochfrequenzvorschaltgeräte wird in der Schaltungsanordnung nach Fig. 1 oder 4 der aus Leistungsverstärker 7, Ballastimpedanz 9 und gegebenenfalls Gleichspannungsquelle 15 bestehende Schaltungsteil durch die Leistungselektronik des entsprechenden Vorschaltgerätes ersetzt, die dann vom Ausgangssignal des Analog-Multiplexers 5 angesteuert wird.

Mit dem beschriebenen Verfahren lassen sich in Hochdruck-Metalldampfentladungslampen nicht nur longitudinale, sondern auch azimuthale und radiale akustische Resonanzen vermeiden. Die Lampen brauchen keinen zylindrischen Kolben aufzuweisen, sondern können z.B. auch kugel- oder ellipsoidförmig ausgebildet sein.

**Patentansprüche**

1. Verfahren zum Betrieb einer Hochdruck-Metalldampfentladungslampe mit einer periodischen Betriebsspannung von über 500 Hz, dadurch gekennzeichnet, dass die Betriebsspannung ständig sprunghaft in der Phase geändert wird.

2. Verfahren nach Anspruch 1, dadurch gekennzeichnet, dass die Betriebsspannung Phasensprünge von 50 bis 130°, vorzugsweise von 90°, aufweist.

3. Verfahren nach Anspruch 1 oder 2, dadurch gekennzeichnet, dass die Phasenänderung periodisch oder statistisch vorgenommen wird.

4. Verfahren nach Anspruch 3, dadurch gekennzeichnet, dass die Phasenänderung jeweils nach ½ bis 20 Perioden der Betriebsspannung erfolgt.

5. Verfahren nach einem der Ansprüche 1 bis 3, dadurch gekennzeichnet, dass zum Betrieb kleiner Hochdruck-Metalldampfenlladungslampen mittels einer periodisch sprunghaft in der Phase geänderten periodischen Betriebsspannung mit einer Frequenz von über 5 KHz die Betriebsspannung gleichzeitig in ihrer Frequenz gewobbelt wird.

6. Verfahren nach Anspruch 5, dadurch gekennzeichnet, dass der Betriebsspannung eine Gleichspannung überlagert wird.

7. Verfahren nach Anspruch 6, dadurch gekennzeichnet, dass die Betriebsspannung Phasensprünge von 100 bis 250°, vorzugsweise von 180°, aufweist.

8. Schaltungsanordnung zur Ausübung des Verfahrens nach einem der Ansprüche 1 bis 4, dadurch gekennzeichnet, dass ein periodisches Signal eines Signalgenerators (1) einmal direkt und einmal über einen Phasenschieber (4) einem Analog-Multiplexer (5) und von dort über einen Leistungsverstärker (7) der Hochdruck-Metalldampfentladungslampe (8) als Betriebsspannung zugeführt wird, wobei mit Hilfe eines digitalen Impulsgenerators (12) der Analog-Multiplexer entweder periodisch oder statistisch abwechselnd direkt oder über den Phasenschieber den Signalgenerator mit dem Leistungsverstärker verbindet.

9. Schaltungsanordnung nach Anspruch 8 zur Ausübung des Verfahrens nach einem der Ansprüche 5 bis 7, dadurch gekennzeichnet, dass der Analog-Multiplexer (5) periodisch den Signalgenerator (1) mit dem Leistungsverstärker (7) verbindet und der spannungsgesteuerte Signalgenerator (1) von einem Spannungsgenerator (14) konstanter Amplitude ($U_w$) und Frequenz ($f_w$) derart beaufschlagt wird, dass sein Ausgangssignal in der Frequenz um eine Mittenfrequenz $f_o$ mit einem Frequenzhub $\pm\Delta f$ geändert wird.

10. Schaltungsanordnung nach Anspruch 9, dadurch gekennzeichnet, dass zwischen Leistungsverstärker (7) und Lampe (8) eine Gleichspannungsquelle (15) geschaltet ist.

**Claims**

1. A method of operating a high-pressure metal vapour discharge lamp having a periodical operating voltage of more than 500 Hz, characterized in that the operating voltage is constantly varied in phase in a jump-like manner.

2. A method as claimed in Claim 1, characterized in that the operating voltage exhibits phase jumps of 50 to 130°, preferable of 90°.

3. A method as claimed in Claim 1 or 2, characterized in that the phase variation is effected periodically or statistically.

4. A method as claimed in Claim 3, characterized in that the phase variation takes place each time after ½ to 20 periods of the operating voltage.

5. A method as claimed in any one of Claims 1 to 3 inclusive, characterized in that the operation voltage is simultaneously wobbled in its frequency for operating small high-pressure metal vapour discharge lamps by means of a periodical operating voltage having a frequency of more than 5 kHz varied periodically in phase in a jump-like manner.

6. A method as claimed in Claim 5, characterized in that a direct voltage is superimposed on the operating voltage.

7. A method as claimed in Claim 6, characterized in that the operating voltage exhibits phase jumps of 100 to 250°, preferably of 180°.

8. A circuit arrangement for carrying out the method as claimed in any one of Claims 1 to 4 inclusive, characterized in that a periodical signal of a signal generator (1) is supplied on the one hand directly and on the other hand through a phase shifter (4) to an analogue multiplexer (5) and thence through a power amplifier (7) to the high-pressure metal vapour discharge lamp as the operating voltage, the analogue multiplexer connecting either periodically or statistically alternately directly or through the phase shifter the signal generator to the power amplifier by means of a digital pulse generator (12).

9. A circuit arrangement as claimed in Claim 8, for carrying out the method as claimed in any one of Claims 5 to 7 inclusive, characterized in that the analogue multiplexer (5) connects periodically the signal generator (1) to the power amplifier (7) and the voltage-controlled signal generator (1) is acted upon by a voltage generator (14) having a constant amplitude ($U_w$) and frequently ($f_w$) in such a manner that its output signal is varied in frequency about an intermediate frequency $f_o$ with a frequency sweep of $\pm\Delta f$.

10. A circuit arrangement as claimed in Claim 9, characterized in that a direct voltage source (15) is arranged between the power amplifier (7) and the lamp (8).

**Revendications**

1. Procédé pour le fonctionnement d'une lampe à décharge dans la vapeur métallique à haute pression présentant une tension de fonctionnement périodique supérieure à 500 Hz, caractérisé en ce que la tension de fonctionnement varie continuellement par sauts dans la phase.

2. Procédé selon la revendication 1, caractérisé en ce que la tension de fonctionnement présente des sauts de phase de 50 à 130°, de préférence de 90°.

3. Procédé selon la revendication 1 ou 2, caractérisé en ce que les variations de phase s'effectuent périodiquement ou statistiquement.

4. Procédé selon la revendication 3, caractérisé en ce que la variation de phase s'effectue chaque fois après ½ à 20 périodes de la tension de fonctionnement.

5. Procédé selon l'une des revendications 1 à 3, caractérisé en ce que pour le fonctionnement de petites lampes à décharge dans la vapeur métallique à haute pression à l'aide d'une tension de fonctionnement périodique variant périodiquement et par sauts en phase à une fréquence supérieure à 5 kHz, la tension de fonctionnement est simultanément vobulée en fréquence.

6. Procédé selon la revendication 5, caractérisé en ce qu'une tension continue est superposée à la tension de fonctionnement.

7. Procédé selon la revendication 6, caractérisé en ce que la tension de fonctionnement présente des sauts de phase de 100 à 250° de préférence de 180°.

8. Circuit pour la mise en œuvre du procédé selon l'une des revendications 1 à 4, caractérisé en ce qu'un signal périodique d'un générateur de signal (1) est amené une fois de façon directe et une fois par l'intermédiaire d'un déphaseur (4) d'un multiplexeur analogue (5) et à partir de ce dernier par l'intermédiaire d'un amplificateur de puissance (7) à la lampe à décharge dans la vapeur métallique à haute pression (8) comme tension de fonctionnement, le multiplexeur analogue assurant la connexion du générateur de signal à l'amplificateur de puissance à l'aide d'un générateur d'impulsions numériques (12), soit de façon directe périodique ou statistique alternative, soit par l'intermédiaire du déphaseur.

9. Circuit selon la revendication 8 pour la mise en œuvre du procédé selon l'une des revendications 5 à 7, caractérisé en ce que le multiplexeur analogue (5) assure la connexion périodique du générateur de signal (1) à l'amplificateur de puissance (7) et que le générateur de signal commandé par tension (1) est influencé par un générateur de tension (14) à amplitude constante ($U_w$) et à fréquence ($f_w$) de façon que la fréquence de son signal de sortie autour d'une fréquence centrale $f_o$ varie à excursion de faéquence $\pm \Delta f$.

10. Circuit selon la revendication 9, caractérisé en ce qu'une source de tension continue (15) est montée entre l'amplificateur de puissance (7) et la lampe (8).

0 066 927

FIG.1

FIG.2

FIG.3

7

**FIG.4**

**FIG.5**